# EUROPÄISCHE PATENTANMELDUNG

(11) **EP 0 889 631 A1**
(43) Veröffentlichungstag der Anmeldung: **07.01.1999**
(21) Anmeldenummer: 98112411.8
(22) Anmeldetag: 03.07.1998
(51) Int. Cl.: H04M 11/04, H04Q 7/32, H04M 1/02

(54) **Mobiles Notruftelefon**

(30) Priorität: 04.07.1997 DE 19728684
(71) Anmelder: Cloanto Italia Srl, 33100 Udine (IT)
(72) Erfinder: Battilana, Michael C., 33100 Udine (IT)
(74) Vertreter: Grünecker, Kinkeldey, Stockmair & Schwanhäusser Anwaltssozietät

(57) **Zusammenfassung**

Mobiles Notruftelefon mit einem Gehäuse, einer Tastatur, einer Anzeigeeinrichtung und mit einem Sende-/Empfangsteil. Das Notruftelefon ist in einem kommerziellen Mobilfunktelefonnetz betreibbar und ausschließlich dazu geeignet, eine Notrufverbindung aufzubauen. Das Notruftelefon besitzt keine Teilnehmeridentitätskarte und löst bei Betätigung einer Notruftaste die Wahl einer in dem kommerziellen Mobilfunktelefonnetzwerk vorgesehenen Notrufnummer aus.

## Beschreibung

Die vorliegende Erfindung bezieht sich auf ein mobiles Notruftelefon gemäß dem Oberbegriff des Patentanspruchs 1.

In den europäischen Ländern besteht ein kommerzielles Mobilfunktelefonnetz, welches nach dem GSM-Standard aufgebaut ist. Gemäß diesem Standard muß jeder Mobilfunktelefonteilnehmer eine Teilnehmeridentitätskarte (SIM-Karte) besitzen, die im Funktelefon aufgenommen ist, andernfalls erhält er keinen Zugang zum Netzwerk. Die Identitätskarte dient zum Schutz vor Mißbrauch und zum Abrechnen der Gesprächsgebühren.

Der GSM-Standard sieht weiterhin vor, daß ein Notruf von einem beliebigen Teilnehmer an einen nahegelegenen Rettungsdienst, beispielsweise Polizei oder Feuerwehr weitergeleitet wird. Ein Notruf wird ausgelöst durch Wählen der einheitlichen Nummer 112 und steht allen Teilnehmern auch in solchen örtlichen Gebieten zur Verfügung, in denen sie keine Teilnehmerberechtigung für normale Telefongespräche besitzen. Der Notruf kann sogar von nicht identifizierbaren Telefonen ausgesandt werden, d.h. Telefonen, deren Teilnehmeridentität nicht erkennbar ist, beispielsweise wenn sich in dem Telefon keine SIM-Karte befindet.

In den anderen Ländern gibt es vergleichbare Standardprozeduren für einen Notruf, beispielsweise ist die in Nordamerika dafür reservierte Nummer 911. Auch in diesen Ländern haben die dafür zuständigen Behörden (im Falle von Nordamerika die FCC-Behörde) entschieden, daß die Netzbetreiber im Interesse der Öffentlichkeit Notrufe ohne Überprüfung der Teilnehmerberechtigung weiterzuleiten haben.

Weiterhin sind im Stand der Technik, beispielsweise aus der US-PS 5,555,286 Notruftelefone bekannt, welche zusätzlich zu den normalen Funktionen eines Mobiltelefons einen Notruf aussenden, wenn ein bestimmtes außergewöhnliches Ereignis eintritt, beispielsweise das Drücken einer Notruftaste oder der Empfang eines Signals, welches eine Notsituation kennzeichnet, z.B. das Alarmsignal einer Autodieb-stahlanlage oder das Auslösensignal eines Airbags.

Wenngleich es möglich ist, wie oben angegeben, ein Mobiltelefon auch ohne SIM-Karte als ein Notruffunktelefon zu verwenden, so ist dennoch dessen Einsatz als ausschließliches Notruftelefon nicht optimal.

Beispielsweise ist das herkömmliche Mobiltelefon mit wiederaufladbaren Batterien bestückt, welche in periodischen Abständen aufgeladen werden müssen, da sie eine hohe Selbstentladungsrate besitzen. Darüber hinaus ist die einer wiederaufladbaren Batterie entnehmbare elektrische Leistung geringer, verglichen mit nicht wiederauflad-baren Batterien. Weiterhin müssen entweder in einer Ladestation oder in dem Telefon elektrische Schaltkreise vorgesehen sein, welche den Ladevorgang der wiederauflad-baren Batterien steuern. Die für diese Schaltkreise erforderliche Hardware erhöht die Kosten und das Gewicht der aus Telefon und zugehöriger Ladestation bestehenden Gesamteinrichtung.

Schließlich besitzen die bekannten Mobiltelefone große räumliche Abmessungen und relativ hohes Gewicht, so daß ihre Eignung als ausschließliches Notruftelefon nur sehr begrenzt ist. Hinzukommt, daß Mobiltelefone zwar in den letzten Jahren einen rasanten Preisverfall erlebt haben, der Kaufpreis für ein Mobiltelefon, insbesondere ohne zugehörigen Kartenvertrag noch relativ hoch ist.

Aus der DE 195 16 810 A1 ist ein ortsbewegliches Notsignalgebergerät bekannt, das über ein privates Funktelefonnetz mit einem Notsignalempfängergerät verbunden ist. Das Notsignalgebergerät weist eine Notruftaste mit einem Schalter zum Auslösen eines Notrufs auf, wodurch die nächstgelegene Notrufstation der Polizei bis zum erfolgreichen Aufbau einer Verbindung angewählt wird. Bei einer aufgebauten Verbindung können digital gespeicherte Texte übertragen werden, der Notrufende kann aber auch mit der Polizei sprechen. Das Notrufgerät enthält eine Wählautomatik nach Art eines Handfunktelefons sowie eine ferngesteuerte Abschaltautomatik, wodurch die Polizeistation die Möglichkeit erhält, das Notsignalgebergerät ferngesteuert auszuschalten oder zu zerstören.

Weiter ist das Notsignalempfängergerät der Polizeistation beispielsweise so ausgerüstet, daß es einen nicht-hörbaren Bestätigungston aussendet, welcher dem Notrufsignalgebergerät anzeigt, daß die Verbindung hergestellt ist. Das Notsignalgebergerät sendet seinerseits ebenfalls einen nicht-hörbaren Ton aus, um der Polizeitelefonanlage zu signalisieren, daß es sich bei dem Anruf um einen Notruf von einem Notrufsignalgebergerät handelt und nicht um den Anruf eines Polizeifunkgeräts.

Die DE 44 13 974 offenbart ein Notrufsystem, bei dem nach Betätigen einer Notruftaste an dem Handapparat eines schnurlosen Telefons über die feste Fernsprechleitung eine Verbindung zu einer Zentrale selbständig hergestellt wird. Anschließend überträgt der Speicher des schnurlosen Telefons einen gespeicherten Notruftext zur Zentralstelle.

Dieses Notrufsystem besitzt den Vorteil, daß sich die notrufende Person nicht in unmittelbarer Reichweite eines Telefonanschlusses aufhalten muß, sondern sich in einer Umgebung von einigen hundert Metern frei bewegen und dennoch auf einfache Weise einen Notruf absetzen kann, der zunächst zur Basisstation des schnurlosen Telefons übertragen wird und von dort in das Festleitungsnetz eingespeist wird.

Die Aufgabe der vorliegenden Erfindung ist es, ein mobiles Notruftelefon zu schaffen, welches für den Einsatz als Notrufgerät besser geeignet ist, als herkömmliche Funktelefone.

Diese Aufgabe wird von einem mobilen Notruftelefon mit den Merkmalen des Patentanspruchs 1 gelöst.

Das besondere an der erfindungsgemäßen Lösung ist der Gedanke, ein Notruftelefon zu schaffen, welches ausschließlich dazu geeignet ist, eine Notrufverbindung zu einem kommerziellen Mobilfunktelefonnetz aufzubauen. Mit dem erfindungsgemäßen Notruftelefon kann keine gewöhnliche Sprechverbindung zu einem anderen Teilnehmer als einem lokalen Rettungsdienst aufgebaut werden, ebensowenig ist es möglich, den Besitzer eines Notruftelefons anzurufen. Der Aufbau dieses Telefons kann folglich stark vereinfacht werden, beispielsweise benötigt das Notruftelefon keinen Lautsprecher für das Klingelzeichen, welcher verschieden von demjenigen ist, der für die Wiedergabe von Sprache vorgesehen ist. Tastatur, Anzeigeeinrichtung und die zugehörige Software können bei dem erfindungsgemäßen Notruftelefon ebenfalls stark vereinfacht werden. Damit wird ermöglicht, alle elektrischen Komponenten, welche für den Aufbau eines normalen Gesprächs in einem Mobilfunktelefonnetz erforderlich sind, zu entfernen, wodurch das Notruftelefon mit kompakten Abmessungen und geringem Gewicht herzustellen ist. Dies führt auch zu einer erheblichen Verbilligung des Gerätepreises und der laufenden Betriebskosten.

Gemäß einem Ausführungsbeispiel der Erfindung ist das Notruftelefon in dem kommerziellen Mobilfunktelefonnetz nicht als Teilnehmer registriert, wodurch die durch die Grundgebühr verursachten Betriebskosten für das Notruftelefon wegfallen. Bei dem Notruftelefon wird folglich ausgenützt, daß kommerzielle Mobilfunktelefonnetze einen Notrufservice auch einem anonymen Teilnehmer bereitstellen und daher einen Notruf auch dann weiterleiten, wenn der sendende Teilnehmer in keinem Verzeichnis registriert ist.

Bei einer vorteilhaften Ausführung des erfindungsgemäßen Notruftelefons können Einrichtungen zum Positionieren und Festhalten einer SIM-Karte oder zum Speichern einer Teilnehmernummer entfallen, was die Abmessungen und Herstellungskosten des Notruftelefons weiter verringert.

Vorzugsweise besteht die Tastatur des Notruftelefons ausschließlich aus einer Notruftaste, deren Betätigung die Wahl einer in dem kommerziellen Mobilfunktelefonnetzwerk vorgesehenen Notrufnummer auslöst. Dadurch wird das Notruftelefon sehr einfach bedienbar und zudem billig und mit geringen Abmessungen herstellbar.

In einer bevorzugten Ausführung ist die Notruftaste zwischen einer Notrufaktivierungsstellung und einer Deaktivierungsstellung bewegbar, wobei die Notruftaste nach einer Betätigung in der gewählten Stellung bis zu einer erneuten Betätigung verbleibt.

Vorzugsweise ist das Sende- und Empfangsteil des erfindungsgemäßen Notruftelefons mit einer im Gehäuse integrierten Antenne versehen, wodurch ein kompaktes Gerät ohne störende Ausziehantenne geschaffen wird. Dabei ist das Sende-/Empfangsteil auf den Betrieb in verschiedenen kommerziellen Mobilfunktelefonnetzen abstimmbar. Dadurch besteht die Möglichkeit, das Notruftelefon in verschiedenen Netzen einzusetzen, beispielsweise sowohl in Ländern, welche dem GSM-Standard unterliegen, als auch denjenigen, welche den Regulierungen der dafür zuständigen nordamerikanischen FCC-Behörde unterworfen sind.

Vorzugsweise weist das Sende-/Empfangsteil mehrere Antennen zum Betrieb in verschiedenen Mobilfunktelefonnetzen auf, damit die Sende/Empfangseigenschaften in jedem beliebigen Netz optimal an die vorgegebenen Betriebsfrequenzen angepaßt sind.

Gemäß einer vorteilhaffen Ausgestaltung besitzt das Gehäuse des Notruftelefons einen verschiebbaren Deckel, der zwischen einer ersten geöffneten Stellung, in der nur die Anzeigeeinrichtung freiliegt, einer zweiten geöffneten Stellung, in der die Tastatur und die Anzeigeeinrichtung freiliegen und einer geschlossenen Stellung, in der die Tastatur und die Anzeigeeinrichtung abgedeckt sind, verschiebbar ist. Dadurch wird sichergestellt, daß nur in der zweiten geöffneten Stellung die Tastatur des Notruftelefons bedienbar ist, wodurch das nicht beabsichtigte Auslösen eines Notrufs sicher verhindert wird. Vorzugsweise löst das Vorbringen des Deckels in die erste geöffnete Stellung ein Überprüfen der Betriebsbereitschaft des Geräts und/oder der Verbindungsbereitschaff zum Mobilfunktelefonnetz und das Anzeigen der Ergebnisse der Überprüfung aus. Das Durchführen dieser Statustests wird dadurch für den Bediener erheblich vereinfacht.

Es ist von Vorteil, wenn in der geschlossenen Stellung des Deckels die Batterien von den elektrischen Schaltkreisen getrennt sind, da dadurch die Selbstentladung des Telefons weiter verringert wird.

Vorzugsweise erfolgt die Überprüfung der Verbindungsbereitschaft zum Mobilfunktelefonnetz zeitlich verzögert zum Überprüfen der Betriebsbereitschaff des Geräts. Dadurch wird eine Ersparnis hinsichtlich des Batterieverbrauchs erreicht, da dann das Überprüfen der Verbindungsbereitschaff zum Mobilfunktelefonnetz optional durchgeführt werden kann.

Die vorliegende Erfindung wird nunmehr anhand eines bevorzugten Ausführungsbeispiels unter Bezugnahme auf die begleitenden Zeichnungen näher erläutert, welche zeigen:
Fig. 1A bis 1C Draufsichten auf das erfindungsgemäße Notruftelefon in einer geschlossenen, einer ersten geöffneten und einer zweiten geöffneten Stellung.
Fig. 2A und 2B eine Seitenansicht bzw. eine Ansicht von hinten auf das erfindungsgemäße Notruftelefon.

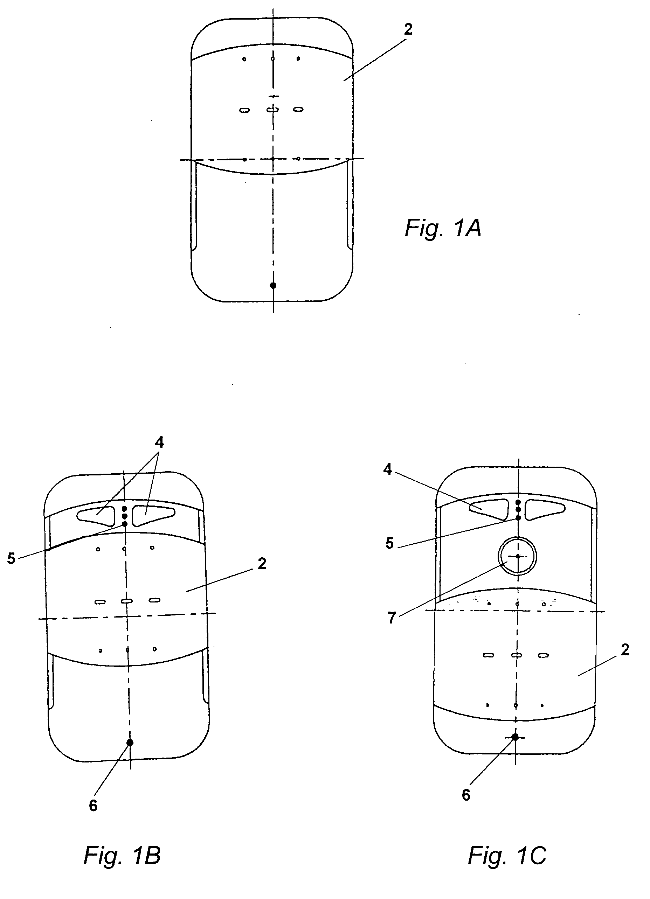

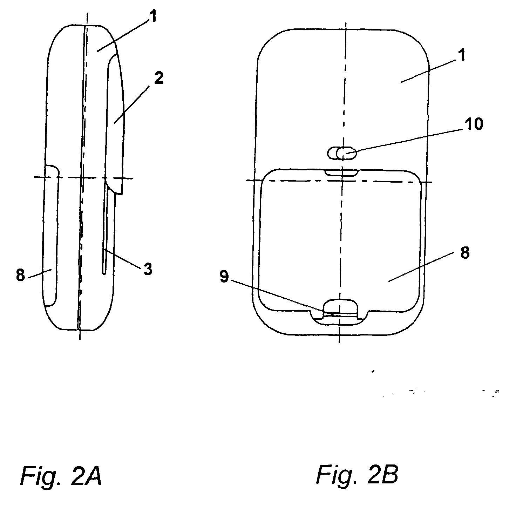

Unter Bezugnahme auf Fig. 1, besitzt das mobile Notruftelefon ein Gehäuse 1 mit einem parallel zur Gehäuseoberfläche verschiebbaren Deckel 2. Das Gehäuse besitzt zu diesem Zweck eine Führungsrille 3, welche in Fig. 2A sichtbar ist. Entsprechend sind an der Innenseite des Deckels Vorsprünge angeordnet, welche in die Führungsrille 3 eingreifen. Alternativ dazu kann auch der Deckel eine Führungsnut besitzen, welche in Eingriff mit einer an der Seite des Gehäuses 1 angeordnete Führungsleiste kommt.

In Fig. 1B, welche eine erste geöffnete Stellung des Notruftelefons zeigt, sind zwei LEDs 4 erkennbar, welche entsprechend den Status der Batterie und die Verbindung zum Netzwerk anzeigen. Die LEDs 4 sind zwei Farben-LEDs, welche sowohl grünes als auch rotes Licht emittieren können. Die LEDs sind von außen nicht direkt sichtbar und werden von einem Bediener durch eine transparente Plastikscheibe betrachtet. Auf der Plastikscheibe kann beispielsweise ein Batterie- oder Antennensymbol aufgedruckt sein.

Zwischen den beiden LEDs 4 ist ein Miniaturlautsprecher 5 angeordnet; ein Mikrofon 6 befindet sich unmittelbar unterhalb des Deckels, wenn dieser sich in einer zweiten, vollständig geöffneten Position befindet, wie in Fig. 1C gezeigt. Eine Notruftaste 7 ist für den Bediener nur in der vollständig geöffneten Position des verschiebbaren Deckels sichtbar und betätigbar. Die Betätigung der Notruftaste wird weiter unten ausführlich beschrieben.

Fig. 2A und 2B zeigen einen Batteriedeckel 8, welcher beweglich an einem Scharnier 9 angelenkt ist. Die Verriegelung des Batteriedeckels 8 wird mit einem Verriegelungsschieber 10 erreicht, der quer zur Längsachse des Gehäuses verschiebbar ist. In dem darunterliegenden, nicht gezeigten Batteriefach finden 4 oder 6 Alkalibatterien vom Typ AA Platz, welche die Stromversorgung des Notruftelefons bereitstellen. Anstelle der Alkalibatterien können auch Lithiumbatterien verwendet werden, die zwar etwas teuerer sind, aber deren Selbstentladungsrate noch geringer ist. Dieser Batterietyp besitzt gegenüber Lithiumbatterien und wiederaufladbaren Batterien Kostenvorteile und eine erheblich geringere Selbstentladung. Um die Selbstentladung weiter zu reduzieren, werden die elektrischen Schaltkreise des Notruftelefons von den Batterien elektrisch isoliert, solange sich der Deckel 2 in der in Fig. 1A gezeigten vollständig geschlossenen Position befindet.

Bei einem Vergleich des erfindungsgemäßen Notruftelefons, welches von Alkalibatterien gespeist wird, mit einem herkömmlichen mobilen Funktelefon, welches wiederaufladbare Batterien verwendet, wurde festgestellt, daß nach einer Lagerzeit von einem Jahr bei Raumtemperatur bei dem Notruftelefon 93% bis 96% der Anfangsleistungskapazität vorhanden war, wogegen bei dem Mobilfunktelefon bestenfalls 60% der Anfangskapa-zität in den wiederaufladbaren Batterien verblieb.

Bei niedrigen Temperaturen besitzen wiederaufladebare Batterien erhebliche Probleme die geforderte elektrische Leistung bereitzustellen, was bei einem Notruftelefon eine nicht akzeptable Unsicherheit hinsichtlich eines zuverläßigen Betriebs darstellt. Derartige Schwierigkeiten treten bei Alkali- oder Lithiumbatterien nicht auf.
Das in den Figuren nicht gezeigte Sende-/Empfangsteil des Notruftelefons besitzt eine in dem Gehäuse (und daher nicht sichtbare) integrierte Antenne, nämlich im oberen Bereich des Notruftelefons, d.h. in der Nähe des Lautsprechers 5. Die Antenne ist für einen Betrieb des Telefons in einem Betriebsfrequenzbereich von 800 bis 900 MHz ausgelegt, wodurch es sowohl in GSM-Netzen (D1, D2) als auch in Netzen gemäß den Standards anderer Länder (z.B. AMPS in Nordamerika) betrieben werden kann. Weiterhin ist es möglich, mit geringfügigen Änderungen im Sende-/Empfangsteil einen Betrieb des Telefons in Netzen mit höherer Frequenz, beispielsweise 1,8 GHz (E-Plus) oder entsprechenden nordamerikanischen Netzen zu erreichen. Soll ein Betrieb in einem breiten Frequenzbereich möglich sein, sind unter Umständen zwei Antennen, von denen eine angewählt wird, vorzusehen.

Das Notruftelefon benötigt keinen Aufnahmeraum und keine Halteeinrichtung für eine Identitätskarte (SIM-Karte), da die kommerziellen Mobilfunktelefonnetze einen anonymen Notruf an die nächstgelegene Rettungsleitstelle weiterleiten, ohne zuvor die Identität des Teilnehmers zu überprüfen. Gemäß einer Variante des Notruftelefons wäre es auch denkbar, eine SIM-Karte zu verwenden, welche dem Notruftelefon eine Teilnehmernummer zuordnet, wobei dieser Teilnehmer aber nur einen begrenzten Service erhält, nämlich nicht anrufbar ist und nur eine auf der Karte gespeicherte Nummer einer Hilfsperson oder Organisation anwählen kann.

Im folgenden soll der Betrieb des Notruftelefons einschließlich die Überprüfung der Betriebsbereitschaft des Geräts und die Möglichkeit einer Verbindung zum Mobilfunktelefonnetz beschrieben werden.

In der in den Fig. 1A und 2A gezeigten vollständig geschlossenen Position des Deckels 2 sind die elektrischen Schaltkreise des Telefons von den Batterien isoliert.

Beim Verbringen des Deckels 2 in die der Fig. 1B gezeigten Position werden die LEDs 4 sichtbar. Eine der LEDs zeigt die Leistungskapazität der Batterien an, wobei die LED grün leuchtet, wenn ausreichend Kapazität vorhanden ist, gelb einen Zustand anzeigt, in dem Betriebsbereitschaft noch besteht, die Batterien aber bald ausgetauscht werden sollten und rot einen Zustand anzeigt, in dem keine Betriebsbereitschaft mehr besteht. Zeitlich verzögert dazu zeigt die andere LED die Verbindung zum Mobilfunktelefonnetz an, wobei ähnliche Farbkodierungen für eine gute, brauchbare und schlechte Verbindung verwendet werden können. Der Benutzer kann daher zunächst die Betriebsbereitschaft des Geräts, insbesondere die Ladekapazität der Batterien überprüfen, was nur sehr wenig Strom verbraucht, und danach auch die Verbindungsbereitschaft zum Mobilfunktelefonnetz optional überprüfen. Wenn die Verbindungsbereitschaft schlecht ist, kann der Benutzer durch Drehen oder Bewegen des Geräts eventuell eine bessere Verbindung zum Netzwerk herstellen.

Wenn der Deckel 2 in die in der Fig. 1C gezeigten Position verschoben wird, besteht die Möglichkeit, die Notruftaste 7 zu drücken. Die Notruftaste 7 beinhaltet selbst eine rot leuchtende LED, welche den Aktivierungszustand der Notruftaste anzeigt. Durch ein Betätigen der Notruftaste verbleibt diese in dem gedrückten Zustand, bis sie erneut gedrückt wird, beispielsweise um den Notruf zu beenden oder eine ungewollte Betätigung wieder aufzuheben. Durch Drücken der Notruftaste wird *die* vorgespeicherte Notrufnummer, beispielsweise 112 in Europa oder 911 in Nordamerika oder eine auf der SIM-Karte gespeicherte Nummer gewählt und ein Funksignal zum Aufbau einer Verbindung mit dem Mobilfunktelefonnetz ausgesandt. Das Aussenden eines Funksig-nals geschieht in herkömmlicher Weise, wie bei bekannten Mobilfunktelefonen und wird daher nicht näher beschrieben.

Das Aussenden eines Funkrufs erlaubt auch die Bestimmung der Position des Notruftelefons über die Messung der Laufzeiten oder der Einfallswinkel des Signals beim Eintreffen in wenigstens zwei Basisstationen. Derartige Dreiecksberechnungen sind bereits vorgeschlagen worden und werden in nächster Zeit umgesetzt.

Andere Verfahren sehen vor, ein Signal zum Notruftelefon zu senden und die Zeitdauer bis zum Eintreffen des Echos zu bestimmen, was zusammen mit der Bestimmung des Einfallswinkels ebenfalls eine Positionsermittlung erlaubt.

Daher besteht keine Notwendigkeit, das Notruftelefon mit einem Empfänger auszurüsten, um über das GPS (Global Positioning System) die Position des Notruftelefons zu bestimmen.

## Patentansprüche

1. Mobiles Notruftelefon mit einem Gehäuse (1), einer Tastatur (7), einer Anzeigeeinrichtung (4) und mit einem Sende-/Empfangsteil,
**dadurch gekennzeichnet**, daß
das Notruftelefon ausschließlich dazu geeignet ist, eine Notrufverbindung zu einem kommerziellen Mobilfunktelefonnetz aufzubauen.

2. Notruftelefon nach Anspruch 1, **dadurch gekennzeichnet**, daß das Notruftelefon nicht als Teilnehmer in dem Mobilfunktelefonnetz registriert ist.

3. Notruftelefon nach Anspruch 2, **dadurch gekennzeichnet**, daß das Telefon keine Teilnehmeridentitätskarte oder einen Speicher zum Speichern einer Teilnehmernummer aufweist.

4. Notruftelefon nach einem der Ansprüche 1 bis 3, **dadurch gekennzeichnet**, daß die Tastatur ausschließlich aus einer Notruffaste (7) besteht, deren Betätigung die Wahl einer in dem Mobilfunktelefonnetzwerk vorgesehenen Notrufnummer auslöst.

5. Notruftelefon nach Anspruch 4, **dadurch gekennzeichnet**, daß die Notruftaste (7) zwischen einer Notruf-Aktivierungsstellung und einer -Deaktivierungsstellung bewegbar ist und daß die Notruftaste (7) nach einer Betätigung in der dadurch gewählten Stellung bis zu einer erneuten Betätigung verbleibt.

6. Notruftelefon nach einem der Ansprüche 1-5, **dadurch gekennzeichnet**, daß das Sende-/Empfangsteil eine im Gehäuse (1) integrierte Antenne aufweist und das Sende-/Empfangsteil auf den Betrieb in verschiedenen kommerziellen Mobilfunktelefonnetzen abstimmbar ist.

7. Notruftelefon nach einem der Ansprüche 1 bis 6, **dadurch gekennzeichnet**, daß das Sende-/Empfangsteil mehrere Antennen zum Betrieb in verschiedenen Mobilfunktelefonnetzen aufweist.

8. Notruftelefon nach einem der Ansprüche 1 bis 7, **dadurch gekennzeichnet**, daß das Gehäuse (1) einen verschiebbaren Deckel (2) aufweist, der zwischen einer ersten geöffneten Stellung, in der nur die Anzeigeeinrichtung (4) freiliegt, einer zweiten geöffneten Stellung, in der die Tastatur (7) und die Anzeigeeinrichtung (4) freiliegen und einer geschlossenen Stellung, in der die Tastatur (7) und die Anzeigeeinrichtung (4) abgedeckt sind, verschiebbar ist.

9. Notruftelefon nach Anspruch 8, **dadurch gekennzeichnet**, daß das Verbringen in die erste geöffnete Stellung eine Überprüfung der Betriebsbereitschaft des Gerätes und/oder der Verbindungsbereitschaft zum Mobilfunktelefonnetz und das Anzeigen des Ergebnisses der Überprüfung auslöst und daß in der geschlossenen Stellung des Deckels (2) die Batterien von den elektrischen Schaltkreisbauteilen des Telefons elektrisch getrennt sind.

10. Notruftelefon nach Anspruch 9, dadurch gekennzeichnet, daß die Überprüfung der Verbindungsbereitschaff zum Mobilfunktelefonnetz zeitlich verzögert zum Überprüfen der Betriebsbereitschaft des Geräts erfolgt.
